# EUROPEAN PATENT APPLICATION

(11) **EP 2 014 615 A1**
(43) Date of publication of application: **14.01.2009**
(21) Application number: 07425410.3
(22) Date of filing: 05.07.2007
(51) Int. Cl.: C01B 3/38, B01J 8/04

(54) **Steam-reforming-based fuel-processing apparatus and method for fast start-up thereof**

(71) Applicant: Electro Power Systems S.p.A., 10091 Alpignano (IT)
(72) Inventor: Quaglia, Alberto, 10137 Torino (IT); Baldini, Luca, 10129 Torino (IT); Santagiuliana, Andrea, 10095 Recoaro Terme (IT); Rosso, Ilaria, 10064 Pinerolo (IT)
(74) Representative: Jorio, Paolo

(57) **Abstract**

Apparatus (1) for fuel processing through steam reforming, in particular for the production of hydrogen to be supplied to a fuel cell electric generator, comprising a burner (2), at least a first steam reforming reactor (3) supplied at the inlet with a flow of fuel to be reformed, and at least a first vaporizer (6) sized so as to generate, from a predetermined first flow of water, possibly pre-heated, coming from a source of water, a corresponding first pre-determined flow of steam to be supplied at the inlet to the first reactor (3) subsequent to heating of the first flow of water as a result of a thermal exchange with a flow of flue gases produced by the burner, wherein the at least one vaporizer (6) is connected to burner (2) and to first reactor (3) in such a way that it is flown through by the flow of flue gases, hydraulically in series with burner (2) and first reactor (3), and upstream from the latter with respect to a flow direction of the flow of flue gases. The invention further relates to a method for the fast start-up of the fuel processing apparatus described above.

## Description

The present invention refers to the field of the processing of fuels in view of their subsequent use, commonly known in the art by the name "Fuel Processing". In particular, hydrocarbon-based fuels are converted in a reformate enriched in hydrogen for ultimate applications in devices and processes which consume hydrogen, e.g. for systems which generate electric power by means of fuel cells. More particularly, the invention refers to an apparatus for the treatment of hydrocarbon fuels based on steam reforming and having a peculiar system of thermal management, as well as to a method for a quick start-up of the same.

Hydrogen is used in several industrial fields ranging from aerospace to food industry, to the production and refinement of oil and gaseous fuels. Hydrogen is used, within these industries, as a carrier gas, as diluent, as a fuel in combustion reactions and in fuel cells, as well as a reducing agent in many processes and chemical reactions.

Further, hydrogen is the object of interest as an alternative fuel for energy production, because it is renewable, abundant, usable in an efficient manner and, differently from other fuels, its combustion does not produce polluting emissions.
Although use is already being made of hydrogen and there exists the potential for an even greater use thereof, an advantage hindering a further increase in the consumption of hydrogen is the lack of infrastructures allowing the production, storage and widespread distribution thereof.

One way to overcome this difficulty is the generation of hydrogen through the use of fuel processors to convert hydrocarbon-based fuels in a reformate rich in hydrogen. Fuel reforming processes, like steam reforming, partial oxidation and autothermal reforming may be used to convert in situ hydrocarbon-based fuels like natural gas, GPL, petrol and diesel oil into a reformate rich in hydrogen, precisely where hydrogen is necessary.

However, in addition to hydrogen, fuel processors typically produce undesired impurities which reduce the value of the reformate produced. For example, in a conventional steam reforming process, an inlet flow of hydrocarbons, e.g of methane, natural gas, propane, petrol, naphta or diesel oil, is vaporised - in case it is not already in the gaseous form - mixed with steam and led to pass over a steam reforming catalyst. Most of the inlet flow of hydrocarbons is converted to a mixture of reformate consisting of hydrogen and impurities such as carbon monoxide and carbon dioxide.

In order to reduce the carbon monoxide content, the reformate is typically subjected to the so-called "water-gas shift" reaction, i.e. of shifting of the gas-water equilibrium, wherein carbon monoxide is led to react with steam so as to form carbon dioxide and hydrogen.
Next, additional purification steps may be used to bring the hydrogen purity to acceptable levels. These purification steps may include, but are not limited to, methanation, selective oxidation reactions, membrane separation techniques, and selective adsorption by using periodic variations of temperature and/or pressure.

A fuel processing plant based on the steam reforming technology generally comprises:
- a burner for the production of thermal power necessary for the energetic sustenance of the overall process (the latter consists of a combination of exothermic and endothermic contributions, the sum of which equals the energetic supply required by the system);
- a first steam reforming (SR) reactor, wherein the flow of hydrocarbons supplied is converted by reacting with steam into a gaseous mixture rich in hydrogen, according to a reaction (shown for the case where the hydrocarbon flow supplied contains essentially methane) of the type:

   CH₄ + H₂O → CO + H₂ (1)
- a second "water-gas shift" (WGS) reactor, wherein carbon monoxide is converted, by reacting again with steam, thereby enriching the gaseous mixture in hydrogen:

   CO + H₂O → CO₂ + H₂ (2)
- a third reactor (CO-PROX) of carbon monoxide preferential oxidation, wherein there is favoured the selective oxidation of the CO present in the mixture to carbon dioxide, according to the exothermic reaction:

   CO + ½ O₂ → CO₂ (3)
- a plurality of heat exchangers, in particular at least a vaporization heat exchanger to obtain the steam flow to supply, together with the hydrocarbon flow, to the SR reactor, and generally other heat exchangers designed so as to improve the degree of energetic interaction among the various portions of the system (e.g. for the pre-heating of the reagents to supply to the SR reactor by using the residual heat of the flue gases, with a view to recovering the heat produced in the second and third reactor, etc.).

The start-up phase of a fuel processing system is particularly delicate. It is finalised to the heating of the high temperature section of the plant, which consists essentially of the first, second and third reactor, and to the production of steam. As a matter of fact, the system cannot enter the actual productive phase until there is steam production.

The main goal of the start-up phase is, therefore, obtaining a pre-determined amount of steam, which can however be less than the amount of steam necessary to operate under nominal conditions.

It is therefore apparent that the main technical problems in this field lie in reducing the start-up time and simplifying at the most the start-up procedure itself whilst keeping at the same time at acceptable levels the production of potential impurities.

Systems for the generation of hydrogen by "steam reforming" of fuels are known, for example, from EP1408003 and US2007/0036707, which however do not fully solve the problems mentioned above.

It is therefore an object of the present invention to provide an apparatus for fuel processing through "steam reforming" and a method for the start-up thereof that enable the overcoming of the drawbacks described. In particular, it is an object of the present invention to provide an apparatus for fuel processing through "steam reforming" that enables the obtaining of a fast start-up (between 15 and 30 minutes), as well as to ensure, subsequently, an efficient nominal operation.

It is also an object of the present invention to provide an apparatus for fuel processing through "steam reforming" that enables a significant improvement of the energetic integration of the plant and to carry out a start-up thereof which enables a substantial reduction of the time necessary to bring the system from idle to the nominal operating conditions.

According to the present invention, there is therefore provided an apparatus for fuel processing through "steam reforming" according to claim 1.

In particular, according to the present invention, there is provided an apparatus for fuel processing through steam reforming, in particular for the production of hydrogen to be supplied to a fuel cell electric generator, comprising a burner, at least a first steam reforming reactor supplied at the inlet with a flow of fuel to be reformed, and at least a vaporizer sized so as to generate, from a predetermined first flow of water, possibly pre-heated, coming from a source of water, a first predetermined flow of steam to be supplied at the inlet to the first reactor subsequent to heating of the first flow of water due to a thermal exchange with a flow of flue gases produced by the burner, wherein the at least one vaporizer is connected to the burner and to the first reactor so as to be flown through by the flow of flue gases hydraulically in series with the burner and the first reactor, and upstream from the first reactor with respect to a flow direction of the flow of flue gases.

According to the present invention there is further provided a start-up method according to claim 10.

In particular, according to the present invention there is provided a method of starting up an apparatus for fuel processing through steam reforming, in particular for the production of hydrogen to be supplied to a fuel cell electric generator, comprising the steps of:
a) supplying a first flow of water equal to a first predetermined volume to a first vaporizer arranged immediately downstream from a burner with respect to a flow of flue gases produced by the burner, in order to generate a first predetermined amount of a first flow of steam to be supplied to a first reactor of the fuel processing apparatus along with a flow of fuel to be reformed;
b) increasing the volume of the first flow of water progressively until a second volume of flow of water, greater than the first and substantially corresponding to that necessary for nominal conditions operation of the fuel processing apparatus, is reached;
c) simultaneously with step b), increasing the flow-rate of the flow of fuel to be reformed until a value of flow of fuel corresponding to the operation of the fuel processing apparatus under nominal conditions is reached, so as to generate a progressively increasing flow of the first flow of steam until a maximum value of the flow of steam is reached which corresponds to that necessary for the operation of the fuel processing apparatus under nominal conditions;
d) waiting until the whole mass of the fuel processing apparatus reaches a temperature substantially equal to that of nominal operating conditions;
e) interrupting the supply of the first flow of water to the first vaporizer and at the same time supply a second vaporizer arranged immediately downstream from the first reactor with respect to a flow of flue gases produced by the burner with a second flow of water having a volume equal to the second volume of flow of water, in order to generate a second flow of steam to be supplied to the first reactor equal to the maximum value of the first flow of steam.

Further characteristics and advantages of the present invention will appear from the following description of some non-limitative embodiments thereof which is given with reference to the figures of the attached drawings, wherein:
Figure 1 is a block flow diagram of the apparatus for fuel processing through steam reforming according to the invention in the configuration corresponding to the start-up phase;
Figure 2 is a block flow diagram of the apparatus for fuel processing through steam reforming according to the invention in the configuration corresponding to the operation under nominal conditions.

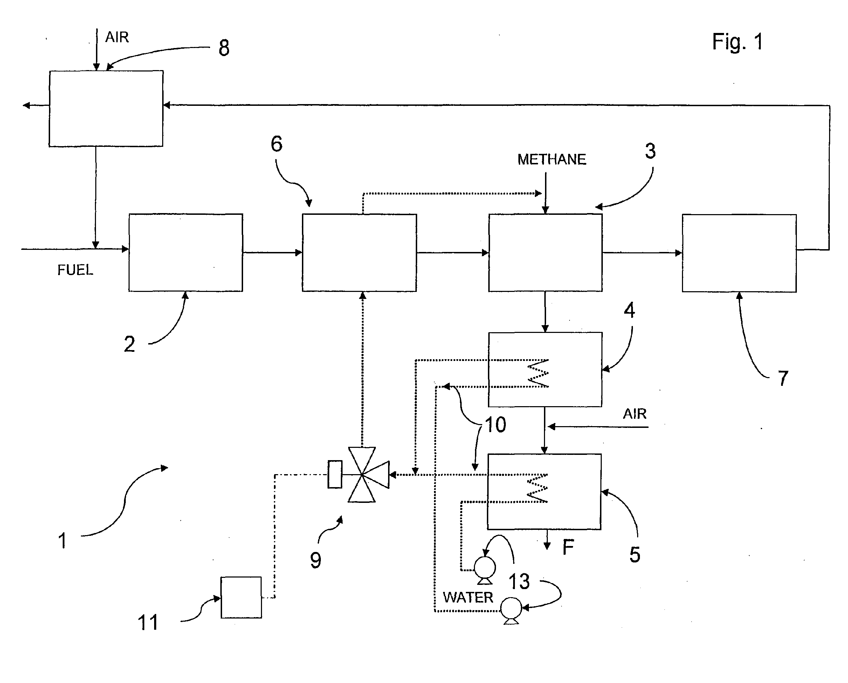

In figure 1 there is indicated with 1 an apparatus for fuel processing through steam reforming according to the present invention. It comprises a burner 2, at least a first steam reforming reactor supplied at the inlet with a flow (FUEL) of fuel to be reformed, at least a first vaporizer 6 sized so as to generate, for instance from a predetermined flow of water, possibly pre-heated, coming from a source of water, a corresponding first pre-determined flow of steam to be supplied at the inlet to the first reactor 3 subsequent to heating of the first flow of water as a result of a thermal exchange with a flow of flue gases produced by the burner 2; in particular, according to a first aspect of the invention, the vaporizer 6 is connected to burner 2 and to the first reactor 3 in such a way that it is flown through by the flow of flue gases, hydraulically in series with burner 2 and first reactor 3, and upstream from the latter with respect to a flow direction of the flow of flue gases.

Apparatus 1 further comprises, according to a further aspect of the invention, a second vaporizer 7 sized so as to generate, from a predetermined second flow of water, possibly pre-heated, coming from the source of water, a second predetermined flow of steam to be supplied at the inlet to the first reactor 3 subsequent to heating of the second flow of water resulting from a thermal exchange with a flow of flue gases produced by the burner; second vaporizer 7 is connected to burner 2 and to first reactor 3, so as to be flown through by the flow of flue gases, hydraulically in series with burner 2 and first reactor 3, and downstream from first reactor 3 with respect to a flow direction of the flow of flue gases.

According to the invention, apparatus 1 further comprises, in combination with second vaporizer 7, means 9 for connecting selectively the source of water with the first and, respectively, second vaporizer 6,7 in order to selectively supply through them the above flows of water necessary to generate, selectively, the respective flows of steam to be supplied to first reactor 3. Such means 9 of selective connection, in an embodiment of the apparatus according to the invention, consist of at least a valve controlled by a control unit 11.

The thermal energy necessary for satisfying the thermal balance of the system is produced by combustion of a flow of fuel, which is mixed with a flow of air (oxidiser) possibly preheated and subsequently supplied at the inlet to burner 2. The flue gases leaving burner 2 flow sequentially through, in series, first high temperature vaporizer 6, first steam reforming reactor 3, and, further, medium temperature second vaporizer 7.

The flue gases leaving second vaporizer 7 may be sent to an economizer 8, arranged downstream from vaporizer 7 itself with respect to the flow of flue gases, and designed so as to pre-heat at the expense of the flow of flue gases the flow of air (oxidiser) entering the system.

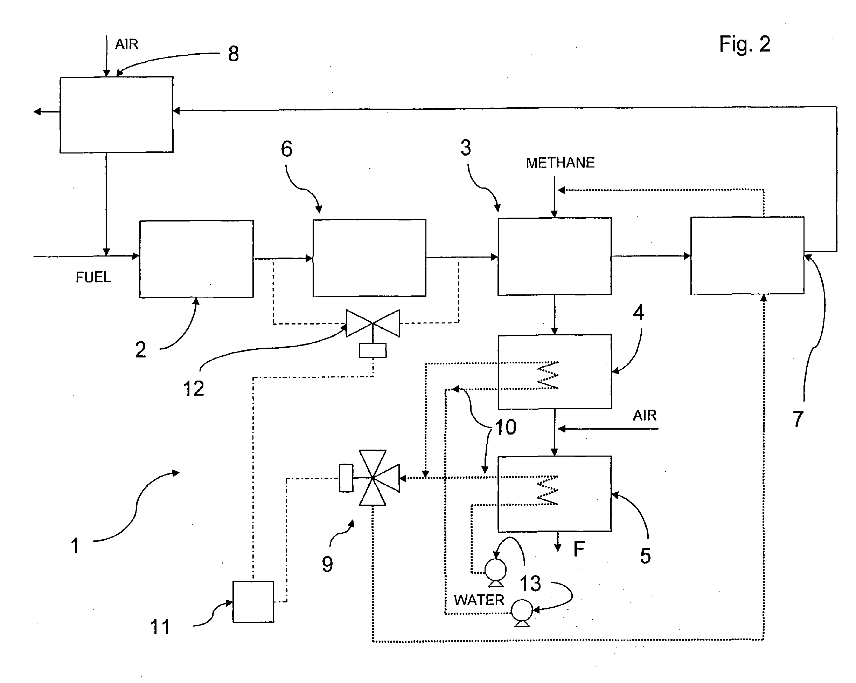

According to the present invention, apparatus 1 further comprises a second (water gas-shift) reactor 4 and a third (CO-PROX) reactor 5 which complete the actual fuel processing section. Such reactor 4 and 5 are arranged hydraulically in series with, and downstream from, first reactor 3 with respect to a flow F of reformate leaving apparatus 1 (indicated with an arrow in figures 1 and 2) and deriving from the flow of fuel to be reformed supplied at the inlet to first reactor 3, in the example illustrated consisting non-limitatively of methane.

There is therefore supplied to first (steam reforming) reactor 3 current CH₄ of hydrocarbon-based fuel (for example, and for the sake of simplicity in the rest of the description, methane). Reaction products leaving the first reactor 3 are next sent to a second (water-gas shift, WGS) reactor 4 whose products, in their turn, are supplied at the inlet to a third (CO-PROX) reactor 5, from which there is yielded, as the process product, the gaseous current F particularly rich in hydrogen (reformate).

The methane flow fed is reacted in reactor 3 with steam. This steam is generated from liquid state water, which can be preheated, in the example illustrated by removing heat from the second (WGS) reactor 4 and the third CO-PROX reactor 5, which host exothermal reactions.

With that aim, a flow of water suitable for maintaining the desired temperature values within them is sent through supply means 13 (shown only schematically, for example pumps), to both reactors 4 a 5, through suitable thermal exchange means 10 (for example coils, jackets, etc.) of reactors 4 and 5 under the control of suitable regulation means (obvious for the person skilled in the art and therefore not shown, for the sake of simplicity, but only schematized in Figure 1 as control unit 11).

During the start-up phase of apparatus 1, the flows of water flowing through the means 10 of thermal exchange remove heat from the second reactor 4 and from the third reactor 5 and are conveyed together towards the first high-temperature vaporizer, thereby forming with them the first flow of water. This, at the outlet of the first vaporizer 6, comes to constitute the above-mentioned first flow of steam, which is then sent to mix with the current of methane entering the first reactor 3.

Given the thermal momentum related to the heating of the metallic mass constituting the structure of the plant, according to the invention this first vaporization is carried out as close as possible to the burner, so as to reduce the momentum-related delays to steam production. In particular, according to the invention, the start-up times of apparatus 1 are advantageously reduced by positioning vaporizer 6 directly upstream from the first steam reforming reactor 3, which represents in itself a considerable fraction of the metallic mass of the plant and, consequently, it contributes significantly to the overall thermal momentum.

On the other hand, since the conversion of the fuel supplied to the steam reforming reactor increases with the increase of the temperature achieved inside said reactor, it is necessary, in order to optimize the operation under nominal conditions, that "fresh" flue gases, i.e. flue gases not yet processed by any apparatus, be supplied to the steam reforming reactor heating jacket so as to achieve higher temperatures.

Therefore, while in the start-up phase only the first high-temperature vaporizer 6 is used for water vaporization, whereas the second medium-temperature vaporizer is solely flown through by the flue gases directed towards economizer 8 without yielding thermal energy to other flows of reagents and/or reaction products, according to the invention such situation is, as will be seen, progressively corrected and substantially inverted in nominal condition operation.

With that aim, through valves 9 commanded by a suitable control system (obvious for the person skilled in the art, therefore not described and only schematized as a control unit 11 in the Figures) the flow of water supplied to the first high-temperature vaporizer 6 is initially set at a predefined volume considered "minimum" from a process standpoint, preferably comprised between 10% and 40% with respect to the value corresponding to the nominal operating conditions of the system.

More preferably, such volume of flow of water supplied to the first vaporizer 6 is regulated at a value equal to approximately 25% of the value corresponding to the nominal operating conditions of the system.

Since it is positioned in the proximity of burner 2, first high-temperature vaporizer 6 reaches the operating temperatures very quickly, since in between itself and the point of the system where the generation of thermal power occurs (i.e. burner 2) there are not great masses determining a significant thermal momentum.

Consequently, first high-temperature vaporizer 6 can begin to generate steam without the delay which in many plants is caused by the thermal momentum introduced by the metallic mass of the steam reforming reactor, practically instantaneously, by making the most of a very-high-temperature heat source such as burner 2.

Once the first vaporizer 6 begins to produce steam at the minimum flow-rate defined above, according to the start-up method of the invention, the increase of the flow-rate of water is also started until the value of water flow-rate corresponding to the nominal operating conditions of the system is reached.

In particular, the water flow-rate is increased as a function of the current leaving the first vaporizer, with the aim of preventing the condensation thereof.

Simultaneously, while the water flow-rate is increased, also increased is the methane flow-rate supplied to the first steam reforming reactor, thus initiating as a matter of fact the reactive section of the process, consisting of reactors 3, 4 and 5.

Thus the supply of reagents to the second water gas shift reactor and the third CO-PROX reactor is also initiated, said reactors hosting exothermal reactions and yielding the heat developed to the flow of water which is pre-heated for being subsequently supplied to the first high-temperature vaporizer 6.

Once the step of simultaneous increase of both methane flow-rate and entity of steam generation is over, the system is kept in that configuration until the heating of the whole of its mass is completed.

It must be noted that in this operating phase first steam reforming reactor 3 is brought to an operating temperature progressively higher, yet still lower than the nominal operating temperature, because the flue gases reach reactor 3 cooled down as a result of the thermal exchange occurring in the first high-temperature vaporizer 6 with the fraction of water to be vaporized.

Once a second configuration corresponding to the nominal thermal load is reached, the system is kept in such configuration until full heating of the whole of its mass to a temperature substantially equal to that corresponding to the operation under nominal conditions.

Once the nominal operating conditions have been reached, the mere cooling of second water-gas shift reactor 4 and third CO-PROX reactor 5 through heat transfer to the flow of water is sufficient for heating the flow of water up to its boiling point. As a consequence, the thermal load necessary for the production of superheated steam decreases significantly.

At this stage, by acting upon valves 9 placed on the water circuit, the supply of said flow of water (which has reached a flow-rate corresponding to that of nominal operation of the plant) to first high-temperature vaporizer 6 is interrupted and said flow of water is instead supplied to second medium-temperature vaporizer 7 which is however positioned downstream from first steam reforming reactor 3. Such current of water comes thereby to constitute the second flow of water. This way there is executed the configuration illustrated in Figure 2, wherein the broken-line arrows schematically indicate the path of water which, taken from a source (not shown) is sent first to the second and then to the third reactor (4,5) and subsequently to the second medium-temperature vaporizer 7 where it receives the enthalpic contribution necessary to be vaporized, thereby coming to constitute the above-mentioned second flow of steam which is supplied, along with methane, to the first steam reforming reactor 3 for the nominal condition operation of apparatus 1.

Thus, since in the operation configuration illustrated in Figure 2 the heat removed by the first high-temperature vaporizer 6 from the flue gases is made null, the flue gases are supplied to the first steam reforming reactor 3 at a temperature higher than the one corresponding to the apparatus start-up configuration, thereby improving the thermal exchange efficiency within first reactor 3 and thus contributing at the same time to increase the ultimate temperature achieved inside reactor 3 and, consequently, the degree of conversion and the overall efficiency of the whole system.

In the configuration of 2, since first vaporizer 6 is no longer, by this stage, hosting the thermal exchange finalised at vaporizing the water to be supplied to first reactor 3, if it were continuously flown through by the flow of flue gases leaving burner 2 it could tend to overheat. In order to prevent such condition from occurring, there may be provided by-pass means 12 for the first vaporizer 6 positioned in parallel thereto in the direction of flow of the flue gases.

## Claims

1. Apparatus (1) for fuel processing through steam reforming, in particular for the production of hydrogen to be supplied to a fuel cell electric generator, comprising a burner (2), at least a first steam reforming reactor (3) supplied at the inlet with a flow of fuel to be reformed, and at least a first vaporizer (6) sized so as to generate, from a predetermined first flow of water, possibly pre-heated, coming from a source of water, a corresponding first pre-determined flow of steam to be supplied at the inlet to the first reactor (3) subsequent to heating of the first flow of water as a result of a thermal exchange with a flow of flue gases produced by the burner, **characterised in that** said at least one vaporizer (6) is connected to burner (2) and to said first reactor (3) in such a way that it is flown through by the flow of flue gases, hydraulically in series with burner 2 and first reactor 3, and upstream from the latter with respect to a flow direction of the flow of flue gases.

2. Apparatus according to claim 1, **characterised in that** it comprises a second vaporizer (7) sized so as to generate, from a predetermined second flow of water, possibly pre-heated, coming from said source of water, a second predetermined flow of steam to be supplied at the inlet to the first reactor (3) subsequent to heating of the second flow of water resulting from a thermal exchange with a flow of flue gases produced by said burner (2), second vaporizer (7) being connected to burner (2) and to first reactor (3), so as to be flown through by the flow of flue gases, hydraulically in series with burner (2) and first reactor (3), and downstream from first reactor (3) with respect to a flow direction of the flow of flue gases.

3. Apparatus according to claim 2, **characterised in that** it further comprises, in combination with second vaporizer (7), means (9) for connecting selectively said source of water with the first and, respectively, second vaporizer (6,7) in order to selectively supply through them the above first and second flow of water in order to generate, selectively, said first and second flow of steam to be supplied to said first reactor (3).

4. Apparatus according to claim 3, **characterised in that** it further comprises a second water-gas shift reactor (4) and a third CO-PROX reactor (5) arranged hydraulically in series with, and downstream from, first reactor (3) with respect to a flow of reformate leaving said apparatus (1) and deriving from said flow of fuel to be reformed supplied at the inlet to said first reactor (3).

5. Apparatus according to claim 4, **characterised in that** said second water-gas shift reactor (4) and third CO-PROX reactor (5) are provided with thermal exchange means (10) arranged hydraulically in series with said first and second vaporizer (6,7) and upstream from said selective connection means (9) of the same to said source of water, with respect to the flow of said first and second flow of water, respectively, to preheat said flows of water and cool said second and third reactor (6,7).

6. Apparatus according to any of claims 3 to 5, **characterised in that** it further comprises an economizer (8) hydraulically connected in series with said second vaporizer (7) and arranged downstream from said second vaporizer (7) with respect to said flow of flue gases; said economizer (8) being designed so as to heat at the expense of said flow of flue gases a flow of air (oxidiser) for said burner (2).

7. Apparatus according to any of claims 3 to 6, **characterised in that** said selective connection means (9) consist of at least a valve commanded by a control unit (11).

8. Apparatus according to claim 7, **characterised in that** it comprises supply means (13) of said first and second flow of water controlled by said control unit (11) along with at least one commanded valve (9).

9. Apparatus according to any of the foregoing claims, **characterised in that** it further comprises by-pass means (12) for said first vaporizer arranged in parallel with respect to the same in the direction of flow of said flow of flue gases.

10. Method of starting up an apparatus (1) for fuel processing through steam reforming, in particular for the production of hydrogen to be supplied to a fuel cell electric generator, comprising the steps of:
a) supply a first flow of water equal to a first predetermined volume to a first vaporizer arranged immediately downstream from a burner with respect to a flow of flue gases produced by said burner, in order to generate a first predetermined amount of a first flow of steam to be supplied to a first reactor of the fuel processing apparatus along with a flow of fuel to be reformed;
b) increasing the volume of said first flow of water progressively until a second volume of flow of water, greater than the first and substantially corresponding to that necessary for nominal conditions operation of the fuel processing apparatus, is reached;
c) simultaneously with step b), increasing the flow-rate of flow of fuel to be reformed until a value of said flow of fuel corresponding to the operation of the fuel processing apparatus under nominal conditions is reached, so as to generate a progressively increasing flow of said first flow of steam until a maximum value of said flow of steam is reached which corresponds to that necessary for the operation of the fuel processing apparatus under nominal conditions;
d) waiting until the whole mass of said fuel processing apparatus reaches a temperature substantially equal to that of nominal operating conditions;
e) interrupting the supply of said first flow of water to said first vaporizer and at the same time supply a second vaporizer arranged immediately downstream from said first reactor with respect to a flow of flue gases produced by said burner with a second flow of water having a volume equal to said second volume of flow of water, in order to generate a second flow of steam to be supplied to said first reactor equal to the maximum value of said first flow of steam.

11. Method according to claim 10, **characterised in that** said first predetermined volume is comprised between 10 and 40% of the value corresponding to the nominal operating conditions of said fuel processing apparatus.

12. Method according to claim 10 or 11, **characterised in that** said first predetermined volume is 25% of the volume of flow of water corresponding to the nominal operating conditions of said fuel processing apparatus.
